# EUROPÄISCHE PATENTSCHRIFT

(11) **EP 0 456 070 B1**
(45) Veröffentlichungstag und Bekanntmachung des Hinweises auf die Patenterteilung: **01.06.1994**
(21) Anmeldenummer: 91106897.1
(22) Anmeldetag: 27.04.1991
(51) Int. Cl.: B65D 21/02, B65D 1/22

(54) **Vorrichtung zum Transport von Backgut**
Device for transporting bakery goods
Dispositif pour le transport de produits de boulangerie

(30) Priorität: 07.05.1990 DE 9005131 U
(43) Veröffentlichungstag der Anmeldung: 13.11.1991
(73) Patentinhaber: RINGOPLAST GmbH, 49824 Ringe (DE)
(72) Erfinder: Klingenberg, Johannes, W-4459 Agterhorn (DE)
(74) Vertreter: Patentanwälte Meinke, Dabringhaus und Partner

(56) Entgegenhaltungen:
- FR-A- 2 531 406
- GB-A- 1 253 561
- GB-A- 2 204 021
- US-A- 3 067 921

## Beschreibung

Die Erfindung richtet sich auf eine Vorrichtung der im Oberbegriff des Anspruches 1 angegebenen Gattung. Aus der GB-A-2 204 021 ist ein Transportcontainer bekannt mit zwei die sonstige Kontur des Containers nach oben und unten überragenden Seitenwänden, deren nach oben weisende Stirnseiten mit rampenartigen, ein Auf- und Abschieben ermöglichenden Vorsprüngen versehen sind. Außenrandseitige Stege am unteren Ende der Seitenwände sorgen bei Übereinanderstapelung für eine Seitenführung, wobei es allerdings zu Fehlpositionierungen kommen kann, wenn diese Seitenführungen nicht genau die Vorsprünge des darunterliegenden Containers außen übergreifen.

Transportvorrichtungen für Backgut (DE-U-88 08 319 und DE-U-89 13 199), z.B. für Brötchen, Hörnchen, Brezel, die von Großbäckereien oder von anderen Großerzeugern vorgefertigt werden und in den Transportvorrichtungen zum Gären in schwach geheizte Öfen geschoben und/oder in speziellen Transportfahrzeugen direkt zu Brotabteilungen von Supermärkten oder Bäckereien gefahren werden, werden zum Transport entweder aufeinandergestapelt oder aber in speziell dafür vorgesehene Transport-Roll-Regale geschoben. Diese in herkömmlicher Weise gestapelten Transportkisten können sich auf der Fahrt zur Bäkkerei leicht gegeneinander verschieben, so daß die Teiglinge verrutschen und sich verformen. Ein Transport der Kisten in Transport-Roll-Regalen ist sehr aufwendig, da die Transport-Roll-Regale über am Fahrzeug angebrachte Hubvorrichtungen vor dem Ausladen erst vom höher gelegenen Fahrzeugladeraum auf den Gehsteig gebracht werden müssen.

Aus FR-A-1 194 656 ist ein Kasten zur Aufnahme von Gegenständen bekannt, der stapelbar ist. Hierzu weist der Kasten an zwei gegenüberliegenden Seitenflächen an deren oberen Kanten außenrandseitig durchgehende Stege auf, zwischen denen ein aufgestapelter Kasten mit entsprechenden Ausnehmungen an der Kastenunterseite eingreifen kann. Hierdurch wird erreicht, daß die aufgestapelten Kästen in Richtung quer zu den Stegen nicht gegeneinander verrutschen können, längs der Stege ist jedoch ein Verrutschen möglich.

Aus GB-A-1 253 561 ist ein ähnlicher Kasten bekannt, der ebenfalls an zwei gegenüberliegenden Längsseiten an den oberen Kanten Stege zum Übereinanderstapeln mehrerer Kästen aufweist, wobei die Stege im übereinandergestapelten Zustand in entsprechende Ausnehmungen an der Kastenunterseite eingreifen. Ein derartiger Kastenstapel ist zwar gegen Verrutschen gesichert, zum Auseinandernehmen der einzelnen Kästen ist aber ein Anheben derselben notwendig.

Aus DE-U-71 01 578 ist ein stapelbares Behältnis bekannt, das an zwei gegenüberliegenden Seitenwänden an den oberen Kanten nasenförmige Vorsprünge und an den unteren Kanten entsprechend geformte Ausnehmungen aufweist. Auch bei dieser ser Lösung ist ein Stapeln und Entstapeln nur durch entsprechendes Anheben der einzelnen Behältnisse möglich.

Nachteilig bei diesen bekannten Lösungen ist somit, daß die zur Gewährleistung der Rutschsicherheit im gestapelten Zustand erforderlichen Einrichtungen dazu führen, daß ein Stapeln und Entstapeln mehrerer Kästen nur durch entsprechendes Anheben der Kästen möglich ist. Dies ist jedoch bei manchen Einsatzfällen nicht möglich wenn beispielsweise in Backöfen nur wenig Raum zur Verfügung steht oder auch deshalb unerwünscht, weil beim Anheben die Teiglinge leicht verrutschen können.

Aufgabe der Erfindung ist die Schaffung einer Lösung, mit der derartige Transportvorrichtungen für Backgut einfach und sicher insbesondere auch von Automaten gestapelt und entstapelt werden können, ohne daß die Teiglinge beim Stapeln oder Transport verrutschen oder defomiert werden und ohne daß die Vorrichtungen einen zu großen Raumbedarf erfordern.

Mit einer Vorrichtung der eingangs bezeichneten Art wird diese Aufgabe bei einer gattungsgemäßen Vorrichtung erfindungsgemäß durch die kennzeichnenden Merkmale des Anspruches 1 gelöst.

Mit der erfindungsgemäßen Ausbildung wird auf einfache Weise die gestellte Aufgabe gelöst. So ist es aufgrund der Aufschiebestege möglich, in kürzester Zeit und auf einfache Weise, ohne das Bckgut zu beschädigen, zahlreiche Transportkisten zum Transport oder zur kurzfristigen Lagerung aufeinander- und abzustapeln, so daß Transportregale überflüssig werden.

Vorteilhaft ist es weiter, daß die Transportkisten beim Abstapeln nicht einzeln angehoben oder entklemmt werden müssen, sondern einfach die jeweils oberste Transportkiste von der nächst darunterliegenden abgezogen werden kann, was auch von Automaten ausgeführt werden kann.

Dadurch, daß die Aufschiebestege im Längsschnitt und/oder im Querschnitt trapezförmig ausgebildet sind, wird einerseits ein leichtes Aufeinanderschieben beim Stapeln bzw. Abziehen beim Entstapeln ermöglicht, andererseits ist ein ausreichend sicherer Halt übereinandergestapelter Kisten gegen Verschieben gewährleistet.

Da die Seitenwände U-förmig profiliert und zur Auflagefläche der Vorrichtung hin offen sind, ergibt sich eine Profilierung, da sie als Aufnahme und Arretierung für den jeweiligen Aufschiebesteg dient, außerdem ist diese Ausbildung materialsparend bei ausreichender Stabilität.

Zur Erhöhung der Transportstabilität von aufeinandergestapelten Transportkisten ist erfindungsgemäß auch vorgesehen, daß die Seitenwände verstärkende Querrippen aufweisen, die von unterschiedlicher Höhe sind. Diese Ausbildung ist dann sinnvoll, wenn die Längsstege (Aufschiebestege) nicht durchgehend, sondern unterbrochen angeordnet sind, weil dann ein Verrutschen der Transportkisten während des Transports zusätzlich verhindert wird. Dabei sind die Querstege in den entsprechenden Seitenwänden um die Länge der Höhe der Aufschiebestege länger als die Querstege der anliegenden Seitenwände. Durch diese Ausbildung können außerdem auch Transportkisten unterschiedlicher Länge aufeinandergestapelt werden.

Ferner kann vorgesehen sein, daß der Bodenbereich mit Querrippen versehen ist, die vorteilhaft rechteckförmig oder rundförmig ausgebildet sind. Dabei sind die durch die Rippen geschaffenen Zwischenräume in etwa der Größe des jeweiligen Teiglinges angepaßt und tragen mit einer darüber gelegten Einlegefolie zur Vermeidung der Verlagerung der Teiglinge während des Transportes bei, ohne daß die Teiglinge auf dem Boden der Transportkiste aufgrund der Teigeigenschaften haften bleiben, was ein unnötiges Säubern erfordert.

Die Erfindung ist nachstehend anhand der Zeichnung beispielsweise näher erläutert. Diese zeigt in
- Fig. 1: in perspektivischer Darstellung eine Transportkistenhälfte,
- Fig. 2: einen Teilschnitt zweier übereinandergestapelter Transportkisten,
- Fig. 3: einen Schnitt durch eine Transportkiste und in
- Fig. 4: eine Einlegefolie.

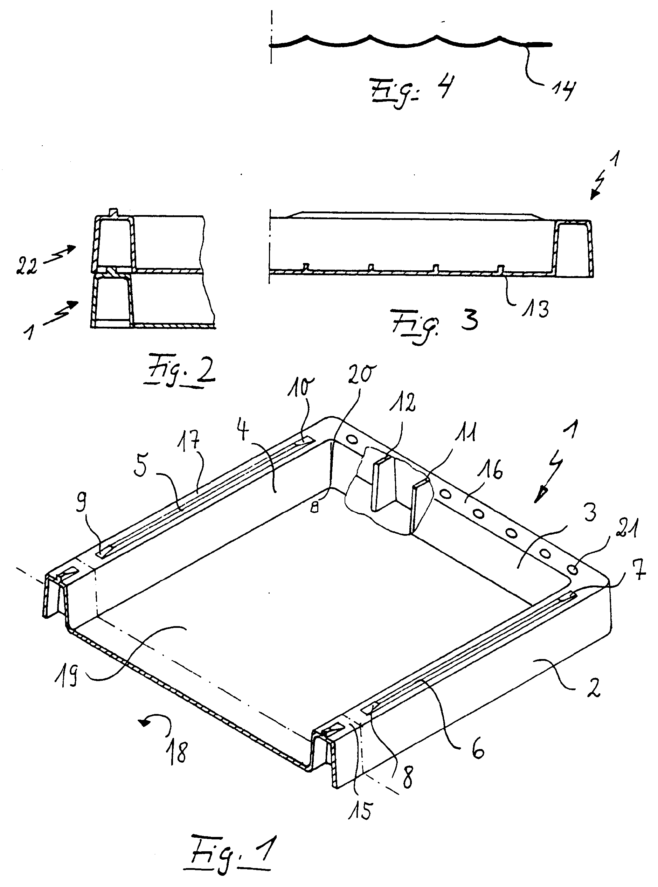

In Fig. 1 ist eine im allgemeinen mit 1 bezeichnete Schale zum Transport und zur Ablage von Teiglingen oder dgl. dargestellt. Sie weist einen im inneren Bereich liegenden Boden 19 und einen umlaufenden Rand, bestehend aus Seitenwänden 2,3,4, auf. Je zwei gegenüberliegende Seitenwände der Schale 1 sind in gleicher Weise gestaltet. So weisen die Seitenwände 2,4 Aufschiebestege 5 und 6 auf. Die Aufschiebestege 5,6 sind im Quer- und Längsschnitt trapezförmig ausgebildet, so daß ein leichtes Auf- und Abstapeln der einzelnen Transportschalen 1 möglich ist.

Die obere Kante 16 der Seitenwnd 3 ist mit Ausnehmungen versehen, die insbesondere dazu dienen, eine Luftzirkulation innerhalb des gestapelten Transportgutes und/oder den Ablauf von Kondenswasser zu ermöglichen.

Auch sind die Seitenwände 2,3,4 mit trapezförmigen Querrippenstegen 11,12 zur Verstärkung ausgestattet (in Fig. 1 nur für die Seitenwand 2 angedeutet). Aus Fig. 1 ist zudem ersichtlich, daß der Boden 19 beispielhaft mit einem Befestigungselement 20 versehen ist, an dem eine Einlegefolie 14 rutschfest befestigt werden kann.

Fig. 2 zeigt zwei gestapelte Transportschalen 1,22, wobei aus der Zeichnung deutlich wird, daß die Querrippen, die in den Seitenwänden 2,4 unterhalb der Aufschiebestege 5, 6 verkürzt sein müssen, um das Stapeln einzelnder Transportschalen 1,22 zu ermöglichen. Ein Verrutschen in Längsrichtung wird dadurch verhindert, daß an den Zwischenräumen zwischen zwei Aufschiebestegen 5,6 die Querrippenstege in den Seitenwänden 2,4 um die Höhe der Aufschiebestege 5,6 verlängert sind.

Fig. 3 zeigt den Bodenbereich 19 mit den Rippen 13, die entsprechend der Größe der einzelnen Teiglinge angeordnet sind und ein Verrutschen des Backgutes verhindern helfen.

Fig. 4 zeigt im Schnitt eine Einlegefolie 14, die den Bodenbereich 19 überdeckt. Sie dient dazu, ein Festkleben der Teigfläche an der Bodenfläche 19 zu verhindern und eine Reinigung des Bodenbereiches 19 von den klebrigen Teigresten zu vermeiden.

Natürlich ist das beschriebene Ausführungsbeispiel der Erfindung noch in vielfacher Hinsicht abzuändern, ohne den Grundgedanken zu verlassen. So ist die Erfindung insbesondere nicht auf die Ausführung in Kunststoff beschränkt, es können auch andere leicht zu reinigende Materialien Verwendung finden. Es ist nach der Erfindung selbstverständlich auch möglich, zahlreiche kleine Aufschiebestege oder Aufschiebenocken zu verwenden, um eine sichere Stapelung durchführen zu können.

## Patentansprüche

1. Vorrichtung zum Transport von Backgut, wie Teiglinge für Brötchen od. dgl., die als Stepelbare im wesentlichen rechteckförmige, oben offene Schale (1) mit profilierten Seitenwänden (2-4) ausgebildet ist, wobei zwei gegenüberliegende Seitenwände (2 u. 4) an ihrer Oberkante Stege mit, das Auf- und Abschieben ermöglichenden Auslauf- und Ablauframpen (7-10) aufweisen,
dadurch gekennzeichnet,
daß die Stege schmäler als die Seitenwände ausgebildet sind und, quer zu ihrer Längserstreckung gesehen, mittig aus den Oberkanten (15,17) der Seitenwände (2,4) herausragen, wobei die Auflauf- und Ablauframpen (7-10) in die Seitenwandoberkanten (15,17) einlaufen, daß die Stege (5,6) im Längsschnitt und/oder im Querschnitt trapezförmig ausgebildet sind und daß die Seitenwände (2,3,4) U-förmig profiliert und zur Auflagefläche (18) der Schale (1) hin offen sind und als Aufnahme und Arretierung für die Stege der im Stapel darunter befindlichen Schale derselben Art dienen.

2. Vorrichtung nach Anspruch 1,
dadurch gekennzeichnet,
daß die Seitenwände (2,3,4) verstärkende Querrippen (11,12) aufweisen, die von unterschiedlicher Höhe sind.

3. Vorrichtung nach Anspruch 1 oder 2
dadurch gekennzeichnet,
daß der Bodenbereich (19) mit Querrippen (13) versehen ist.

4. Vorrichtung nach Anspruch 3,
dadurch gekennzeichnet,
daß die Querrippen im Bodenbereich (19) rechteckförmig oder rundförmig ausgebildet sind.

## Claims

1. A device for transporting bakery wares such as dough portions for rolls or the like, which is in the form of a stackable, substantially rectangular, upwardly open tray (1) having profiled side walls (2-4), wherein two oppositely disposed side walls (2 and 4) are provided at their upper edges with flange portions having run-on and run-off ramps (7-10) to permit pushing movement on to same and off same, characterised in that the flange portions are narrower than the side walls and, viewed transversely to their longitudinal extent, project centrally out of the upper edges (15, 17) of the side walls (2, 4), wherein the run-on and run-off ramps (7-10) blend into the upper edges (15, 17) of the side walls, that the flange portions (5, 6) are of trapezoidal configuration in longitudinal section and/or cross-section, and that the side walls (2, 3, 4) are of a U-shaped profile and are open towards the support surface (18) for the tray (1) and serve as receiving and arresting means for the flange portions of the tray of the sane kind, which is disposed therebeneath in the stack.

2. A device according to claim 1 characterised in that the side walls (2, 3, 4) have reinforcing transverse ribs (11, 12) which are of different heights.

3. A device according to claim 1 or claim 2 characterised in that the bottom region (19) is provided with transverse ribs (13).

4. A device according to claim 3 characterised in that the transverse ribs are of a rectangular or round configuration in the bottom region (19).

## Revendications

1. Dispositif pour le transport de produits de boulangerie, tels que des pâtons pour des petits pains ou objets similaires, réalisé sous la forme d'une cuvette empilable (1) pour l'essentiel rectangulaire, ouverte en partie haute et munie de parois latérales profilées (2-4), deux parois latérales opposées (2 et 4) présentant, sur leur arête supérieure, des nervures pourvues de rampes ascendantes et descendantes (7-10) autorisant le coulissement ascendant et descendant,
caractérisé par le fait
que les nervures sont réalisées plus étroites que les parois latérales et font saillie, observées transversalement par rapport à leur étendue longitudinale, centralement au-delà des arêtes supérieures (15, 17) des parois latérales (2, 4), les rampes ascendantes et descendantes (7-10) fusionnant dans les arêtes supérieures (15, 17) des parois latérales,
que les nervures (5, 6) sont réalisées avec configuration trapézoidale en coupe longitudinale et/ou en coupe transversale et
que les parois latérales (2, 3, 4) sont profilées en U, sont ouvertes vers la surface d'appui (18) de la cuvette (1), et servent de logement et d'arrêt pour les nervures de la cuvette du même type qui occupe une position sous-jacente dans la pile.

2. Dispositif selon la revendication 1,
caractérisé par le fait
que les parois latérales (2, 3, 4) présentent des membrures transversales de renforcement (11, 12) qui sont de hauteurs différentes.

3. Dispositif selon la revendication 1 ou 2,
caractérisé par le fait
que la zone de fond (19) est munie de listels transversaux (13).

4. Dispositif selon la revendication 3,
caractérisé par le fait
que les listels transversaux situés dans la zone de fond (19) sont réalisés avec configuration rectangulaire ou ronde.
